# EUROPEAN PATENT SPECIFICATION

(11) **EP 2 317 875 B1**
(45) Date of publication and mention of the grant of the patent: **31.05.2017**
(21) Application number: 09781953.6
(22) Date of filing: 18.08.2009
(51) Int. Cl.: A23L 7/143, A23L 7/10

(54) **RECONSTITUTED RICE KERNELS AND PROCESSES FOR THEIR PREPARATION**
REKONSTITUIERTE REISKÖRNER UND VERFAHREN ZU IHRER HERSTELLUNG
GRAINS DE RIZ RECONSTITUÉS ET PROCÉDÉS POUR LEUR PRÉPARATION

(30) Priority: 18.08.2008 EP 08105059
(43) Date of publication of application: 11.05.2011
(73) Proprietor: DSM IP Assets B.V., 6411 TE Heerlen (NL)
(72) Inventor: STEIGER, Georg, A-1190 Wien (AT)
(74) Representative: Rabanus, Birgit
(86) International application number: PCT/EP2009/060671
(87) International publication number: WO 2010/020640

(56) References cited:
- EP-A- 2 060 190
- WO-A-86/01683
- WO-A-88/01836
- WO-A-2005/053433
- FR-A- 1 530 248
- US-A- 3 628 966
- US-A- 5 211 977
- US-A- 5 403 606

## Description

The present invention relates to a process for the manufacture of a rice-based rice kernel-like food product (hereinafter referred to as "reconstituted rice kernels" or "recon rice kernels"), especially to reconstituted rice kernels enriched with one or more micronutrients (hereinafter referred to as "enriched reconstituted rice kernels").

For large parts of the population, especially in rural areas in Far East and Latin America, rice is a staple food and may provide more than 50% of the daily caloric intake. However, after milling of the raw rice, only a small fraction of the original vitamin content remains in the grain. The majority of the vitamins are removed together with the hull and the endosperm.

Furthermore, rice is not a significant source for vitamin A, which is one of the most deficient vitamins in malnourished people from emerging and developing countries. Today, vitamin A deficiency is still a major cause of blindness of children in those countries. There is a clear need to provide these populations regularly with the vitamins in the diet that are below their requirement in order to prevent overt diseases but also to prevent the wide prevalence of debilitating marginal deficiencies. For this reason rice fortification programs - among fortification of other staple foods - have been targeted by governments, UN agencies and other non-profit organizations.

Within the last decades scientists and officials have undertaken numerous attempts to develop low-price, simple and efficient methods to fortify rice with vitamins and other micronutrients deficient in the diet wherein the aim of the attempts was to produce artificial kernels that may be mixed with natural grains in a relation of e.g. 1 : 20 up to 1 : 1000, particularly between 1 : 50 up to 1 : 500.

As a matter of fact, none of attempts has been working satisfactorily yet. Although rice would be the preferred carrier in wide parts of the world, the size of the kernels does not allow a simple mixing procedure with vitamin powders or so-called beadlets, because the vitamin forms would segregate immediately from the rice grains. A further difficulty in rice fortification is, that rice is usually rinsed with water prior to cooking and additionally has to be cooked for a period of 20 - 30 minutes, before it is ready to eat, which is remarkable stress to sensitive micronutrients like vitamins. Furthermore a vast number of varieties of rice exist that differ significantly in grain shapes and texture so that is difficult to find one universal method to fortify different rice varieties with vitamins and other micronutrients.

One approach to overcome the above mentioned difficulties is to prepare artificial rice kernels, in which the vitamins are embedded and consequently do not separate from the rice grains. Furthermore, embedding makes extraction of the vitamin by rinsing or cooking more difficult and may provide a certain protection against oxidation, because the vitamins are enveloped by a protective matrix.

French patent publication No. 1,530,248 describes fortified artificial kernels, prepared from dough of semolina or flour and vitamins, which might contain in addition processing aids like mono-/di-glycerides or proteins. The dough is formed to a pasta-like structure by pressing it through a dough press. Then the strands are cut into pieces, which are finally dried. However, the kernels prepared according to this method do not always show a sufficient cooking stability, meaning that the artificial grains tend to disintegrate during cooking and thus release the vitamins to the cooking water which is finally poured off.

US patent No. 3,620,762 discloses a process for producing enriched artificial rice by kneading rice flour, nutrients and if necessary a binder, and then steaming the mixture in order to semigelatinize the starch. After that the product is granulated in order to get grains similar to rice, which finally might be coated. However, this method requires a quite long time for steam treatment of about 15 to 30 min, which can lead to processing losses of sensitive micronutrients like vitamins, and in addition the harsh heating conditions will negatively influence the taste of the artificial grains. Both disadvantages are also true for the method disclosed in US 4,446,163 in which gelatinizing is done by saturated steam in an autoclave.

A method to reduce heating time is extrusion, which has been described several times for the preparation of artificial rice grains. However, in most of the publications the preparation conditions lead to fast-cooking products or even instant products, which are not applicable for the fortification of normal rice. Due to the reduced cooking time, the artificial rice kernels will tend to disintegrate before the normal rice grains are tender and thus will release the micronutrients to the cooking water.

Japanese patent publication 61 037068 also describes the preparation of artificial rice by extrusion, but the preparation conditions lead to an expanded product. As commonly known, expanded products have a reduced density. They will separate easily from natural rice grains and are therefore not feasible for the enrichment of natural rice. This problem is described in JP 58 005148, too. In order to solve it, the addition of a density-increasing agent in a relatively high amount is necessary.

The process disclosed in JP 2002 233317 uses a combination of rice-derived healthy ingredients including vitamins and minerals together with a starchy matter and brown rice or ground brown rice in order to produce artificial rice by extrusion. However, the method needs a "gelatinizing agent" like gelatine, pectin, gums or other binders. Furthermore, only low vitamin enrichment is achieved and the products do not provide micronutrients like vitamin A, which are naturally not present in rice.

The process disclosed in US 5,609,896 once more uses extrusion technology to prepare artificial enriched rice kernels, and overcomes the problem of insufficiently stable kernels and consecutive vitamin loss by adding specific ingredients, viz., a heat stabilizing agent (e.g. sulfites); a binding agent (e.g. solubilized proteins, gums, polysaccharides); a cross-linking agent (e.g. edible aldehydes, glutaraldehyde volatile acids); and an aqueous agent (mainly water).

However, several of the required ingredients - especially from the group of the heat stabilizing and the cross-linking agents - are under discussion to cause allergenic reactions, or to be potentially carcinogenic. Furthermore, the production process consists of several steps, which makes its implementation more difficult and costly.

WO 2005/053433 discloses a process to produce enriched rice kernels comprising the steps of a) hydrating a mixture of comminuted rice matrix material, at least a micronutrient and an emulsifier to obtain a paste containing 15-35 wt.-% of water, b) kneading the paste obtained (exposure to shear force) while heating to about 70 to 100°C for no more than about 5 minutes until the rice starch is semigelatinized, c) forming the semigelatinized mass to strands and cutting them to obtain grains similar or equal to the size of rice grains; and d) drying the grains to a moisture content of no more than 15 wt.-%. It is silent with regard to a pretreatment step consisting in dry heating of the matrix.

It is the objective of the present invention to provide a process for the manufacture of a rice-based rice kernel-like food product avoiding the shortcomings of the prior art. In particular the process should use extrusion technology to prepare the enriched reconstituted rice kernels and the process should be suitable to fortify different rice varieties with vitamins and other micronutrients.

The term "micronutrient" as used herein denotes physiologically essential components of the human diet such as vitamins, e.g., vitamin A, vitamin B1, Folic acid, Niacin and vitamin B12, vitamin B2, vitamin E and C, Biotin, Pantothenates, vitamin K, as well as minerals and trace elements such as Iron, Selenium, Zinc and Calcium. The micronutrients are present in the enriched reconstituted rice provided by the invention in an amount of from 0.1 to 5 % based on the weight of the final composition. Preferably, the micronutrients are present in the enriched reconstituted rice provided by the invention in an amount sufficient to provide about 5% to 300% of the RDA (Recommended Daily Allowance for an adult) in 1 g.

It has surprisingly been found that the object of the present invention is achieved by a process for the manufacture of enriched reconstituted rice kernels comprising the steps of
(a) dry heat treatment of the rice matrix (pre-treatment step);
(b) comminuting of the rice matrix;
(c) adding at least one emulsifier and water and/or steam to the comminuted rice matrix material to obtain a paste containing about 15 to 40 wt.-% of water (hydration step);
(d) adding at least one micronutrient to the paste;
(e) exposing the paste obtained in the preceding steps to shear force while heating it to about 70 to 100 °C for no more than about 5 minutes until the rice starch is semigelatinized; (preconditioning step);
(f) forming the semigelatinized mass to strands and cutting them to obtain grains similar or equal to the size of rice grains; and (forming step);
(g) drying the grains to a moisture content of no more than 15 wt.-% (drying step).

The sequence of steps (a) and step (b) might be exchanged.
Also the sequence of steps (c), (d) and step (e) might be exchanged

The rice matrix material used in the process of the invention may be either intact rice kernels or - more preferably - broken, cracked or otherwise degraded rice grains. The matrix material is - either before or after being comminuted - heated in a suitable dryer to about 60 to 300 °C, preferably to 80 to 90°C. After cooling down the pre-treated matrix material is hydrated by adding water and/or steam until a water content of 15 to 40 wt.-%, preferably 20 to 30 wt.-% is achieved. Furthermore an emulsifier and the micronutrients are added during the hydration step.

Examples of emulsifiers are lecithins or mono- or diglycerides of C₁₄₋₁₈- fatty acids, or mixtures thereof. Preferably, about 0.5 wt.-% to about 3 wt.-% of emulsifier are used, based on the total weight of the paste obtained in step (c).
The micronutrients are usually added in a powdery form, but oily vitamins like vitamin A or vitamin E may also be used as oils. However, powdery product forms - such as dry powder, beadlet or granul(at)es - of oil-soluble vitamins are preferred because of the easier handling of these kinds of preparations. Furthermore, the powdery product forms themselves may provide a certain protection to sensitive micronutrients.

The term "beadlet" as used herein refers to small discrete particles, which have a mean particle size of 50 - 1000 µm in diameter and are usually nearly spherical. Beadlets contain one or more active ingredients in an encapsulated form. Beadlets are obtained when an emulsion or suspension consisting of small lipophilic droplets of an active ingredient dispersed in an aqueous matrix phase, is dried. The lipophilic droplets and/or the matrix can contain further ingredients, like antioxidants, plasticizers, and emulsifiers.

The hydrated mixture is exposed to shear force, e.g., kneaded, to form a paste-like mixture with a simultaneous heat treatment to 70 to 100 °C for no more than 5 minutes. The heating/kneading procedure is referred to hereinafter as "preconditioning". Heating can be accomplished by an external heating source or, preferably, by introducing steam during the process of producing the paste-like mixture.

While all the components, i.e., matrix material, emulsifier and micronutrients may be mixed before wetting it is preferred to first produce a paste-like mixture of the rice matrix material and emulsifier, and to introduce the micronutrients into the paste-like mixture after preconditioning, i.e., just before step (f). In step (f), further processing of the preconditioned mass as obtained in the preceding steps can be accomplished any method used in food technology for processing dough into strands and is preferably carried out by extrusion using conventional gear.

In a preferred embodiment of the invention, a double screw extruder is used. The temperature in the extruder may be 60°C to 120°C with a residence time of the mixture in the extruder being preferably about 10 to 90 seconds. The strands leaving the extruder are adjusted to a diameter similar to that of rice grains and are cut into pieces the size of rice grains. The so obtained grains are dried in a suitable dryer, e.g. a fluidized bed dryer or a belt dryer, to a moisture content of no more than 15 wt.-%. The resulting grains can be admixed to regular rice in a ratio of e.g. 1 wt.-% to natural rice.

The invention is illustrated further by the Examples which follow.

### Example 1

The rice kernels or broken rice were milled to rice flour. The dry rice flour was then heated up to 80 to 90°C and kept at this temperature for about 30 minutes. This step was done without adding any water. After heating the powder was cooled down to about 30°C. 960 g of nicotinamide, 420 g of vitamin A palmitate (500'000 IU/g in the vitamin product form), 84 g of thiamine mononitrate, 26 g of folic acid and 150 g of vitamin B12 (0.1% vitamin B12 in the product form) were mixed. This vitamin premix was mixed with the pre-treated rice flour and 1 kg of emulsifier (distilled monoglycerides sold under the trade name "DIMODAN PH 100 NS/B" by Danisco A/S, Denmark to obtain a 7.5 kg of a vitamin/ emulsifier/ rice flour pre-blend. This pre-blend is dosified with 15 kg/h to an extruder unit, which was fed with 185 kg/h of rice flour. The mass was semigelatinized in a two-chamber preconditioner for about 1-2 minutes at temperatures between 80°C and 98°C by first fluidizing and steaming the flour particles and thus wetting their surface in the first chamber and then slowly mixing the wetted flour particles to let the water soak into the flour particles in the second chamber. Afterwards the dough was extruded in a double screw extruder and formed into similar rice grains by cutting the strands after the die. The grains had a moisture content of 28-29% and were dried in a fluidized bed dryer for 40 minutes at 70°C. After drying the resulting vitaminized similar rice grains were mixed in a ratio of 1% with natural rice.

The content of the respective vitamins in the so-obtained vitamin-enriched rice was as follows:

| | | | Processing loss |
|---|---|---|---|
| Per 1 g: | Vitamin A | 0.52 mg* | 18% |
| | Vitamin B1 | 0.67 mg | 20% |
| | Folic acid | 0.26 mg | 0% |
| | Nicotinamide | 8.5 mg | 11% |
| | Vitamin B12 | 1.32 µg | 12% |

| | | | |
|---|---|---|---|
| * Retinol equivalent | | | |

The obtained artificial rice had a similar appearance, colour and taste like natural rice. It showed a very good cooking stability, so that vitamins were protected and embedded within the grain. In a dilution in natural rice they were not distinguishable. When the extruded rice kernels were washed with water or cooked, no significant loss of vitamins could be detected.

### Example 2

Dry rice kernels or dry broken rice were in a first step heat treated (80 to 90°C for 30 minutes) in a fluid bed dryer, afterwards cooled down to about 30°C and afterwards milled. The dry mixture was wetted with 30 wt.-% water during the extrusion process. Instead of a vitamin mix, only vitamin A (as vitamin A palmitate, 500'000 IU/g powder) was used. The retention of vitamin A after processing was 90%.

### Example 3

Following the procedure of Example 1 but adding vitamin A after preconditioning. For that purpose 420 g vitamin A palmitate (500'000 IU/g in the vitamin product form) and 4580 g rice flour were mixed to obtain a 5 kg vitamin/ rice flour premix. This premix was added to the dough after preconditioning. The retention of vitamin A after processing was 86%.

## Claims

1. Process for the manufacture of enriched reconstituted rice kernels comprising the steps of
(a) dry heat treatment of the rice matrix (pre-treatment step);
(b) comminuting of the rice matrix;
(c) adding at least one emulsifier and water and/or steam to the comminuted rice matrix material to obtain a paste containing about 15 to 40 wt.-% of water (hydration step);
(d) adding at least one micronutrient to the paste;
(e) exposing the paste obtained in the preceding steps to shear force while heating it to about 70 to 100 °C for no more than about 5 minutes until the rice starch is semigelatinized; (preconditioning step);
(f) forming the semigelatinized mass to strands and cutting them to obtain grains similar or equal to the size of rice grains; and (forming step);
(g) drying the grains to a moisture content of no more than 15 wt.-% (drying step).

2. Process according to claim 1 wherein the micronutrient is added after the preconditioning step (e).

3. Process according to any one of claims 1 or 2 wherein the micronutrients are added in an amount to provide 5% to 300% of the RDA value in 1 g of the final composition.

4. Process according to any of the preceding claims wherein the micronutrient(s) is/are chosen from the group consisting of vitamin A, vitamin B1, vitamin B2, vitamin B6, folic acid, niacin, vitamin B12, Vitamin K, vitamin C, and vitamin E.

5. Process according to claim 4 wherein the micronutient(s) is/are added in an amount to provide in the enriched reconstituted rice kernels 45 to 2700 mg/kg of vitamin A equivalents as retinylesters, 60 to 3600 mg/kg of vitamin B1, 20 to 1200 mg/kg of folic acid, 0.8 to 48 g/kg of niacin, and 0.12 to 7.2 mg/kg of vitamin B12.

## Patentansprüche

1. Verfahren zur Herstellung angereicherter rekonstituierter Reiskörner, welches die folgenden Schritt umfasst
(a) Behandeln der Reismatrix mit trockener Wärme (Vorbehandlungsschritt)
(b) Zerkleinern der Reismatrix;
(c) Hinzufügen mindestens eines Emulgators sowie von Wasser und/oder Dampf zu dem zerkleinerten Reismatrixmaterial, um eine Paste zu erhalten, die ungefähr 15 bis 40 Gew.-% an Wasser enthält (Wasserzusatzschritt);
(d) Hinzufügen mindestens eines Mikronährstoffs zu der Paste;
(e) Einwirkenlassen von Scherkräften auf die Paste, welche in den vorhergehenden Schritten erhalten wurde, während diese höchstens ungefähr 5 Minuten lang auf ungefähr 70 bis 100 °C erhitzt wird, bis die Reisstärke halbverkleistert ist; (Vorbereitungsschritt);
(f) Formen der halbverkleisterten Masse zu Strängen und Zerschneiden derselben, um Körner zu erhalten, die der Größe von Reiskörnern entsprechen oder dieser ähnlich sind (Formungsschritt);
(g) Trocknen der Körner bis zu einem Feuchtigkeitsgehalt von höchstens 15 Gew.-% (Trocknungsschritt).

2. Verfahren nach Anspruch 1, wobei der Mikronährstoff nach dem Vorbereitungsschritt (e) hinzugefügt wird.

3. Verfahren nach einem beliebigen der Ansprüche 1 oder 2, wobei die Mikronährstoffe in einer derartigen Menge hinzugefügt werden, dass 5 % bis 300 % des RDA-Werts in 1 g der Endzusammensetzung bereitgestellt werden.

4. Verfahren nach einem beliebigen der vorhergehenden Ansprüche, wobei der/die Mikronährstoff(e) aus der Gruppe ausgewählt ist/sind, die aus Vitamin A, Vitamin B1, Vitamin B2, Vitamin B6, Folsäure, Niacin, Vitamin B12, Vitamin K, Vitamin C und Vitamin E besteht.

5. Verfahren nach Anspruch 4, wobei der/die Mikronährstoff(e) in einer derartigen Menge hinzugefügt wird/werden, dass in den angereicherten rekonstituierten Reiskörnern 45 bis 2.700 mg/kg an Vitamin-A-Äquivalenten in Form von Retinylestern, 60 bis 3.600 mg/kg an Vitamin B1, 20 bis 1.200 mg/kg an Folsäure, 0,8 bis 48 g/kg an Niacin und 0,12 bis 7,2 mg/kg an Vitamin B12 bereitgestellt werden.

## Revendications

1. Procédé de préparation de grains de riz reconstitués et enrichis, comprenant les étapes
(a) de traitement par de la chaleur sèche de la matrice de riz (étape de prétraitement) ;
(b) de broyage de la matrice de riz ;
(c) d'addition d'au moins un émulsifiant et d'eau et/ou de vapeur au matériau de matrice de riz broyé afin d'obtenir une pâte contenant d'environ 15 à 40% en poids d'eau (étape d'hydratation) ;
(d) d'addition d'au moins un micronutriment à la pâte ;
(e) d'exposition de la pâte obtenue dans les étapes précédentes à une force de cisaillement tout en la chauffant à d'environ 70 à 100°C pendant au plus environ 5 minutes jusqu'à ce que l'amidon de riz soit semi-gélatinisé ; (étape de pré-conditionnement) ;
(f) de mise en forme de la masse semi-gélatinisée en fils et de découpage de ces fils afin d'obtenir des grains similaires ou égaux à la taille de grains de riz ; et (étape de mise en forme) ;
(g) de séchage des grains jusqu'à une teneur en humidité non supérieure à 15% en poids (étape de séchage).

2. Procédé selon la revendication 1, dans lequel le micronutriment est ajouté après l'étape de pré-conditionnement (e).

3. Procédé selon l'une quelconque des revendications 1 ou 2, dans lequel les nutriments sont ajoutés selon une quantité destinée à fournir de 5% à 300% de la valeur de DQR dans 1 g de la composition finale.

4. Procédé selon l'une quelconque des revendications précédentes, dans lequel le ou les micronutriments sont choisis dans le groupe constitué par la vitamine A, la vitamine B1, la vitamine B2, la vitamine B6, l'acide folique, la niacine, la vitamine B12, la vitamine K, la vitamine C, et la vitamine E.

5. Procédé selon la revendication 4, dans lequel le ou les micronutriments sont ajoutés selon une quantité destinée à fournir aux grains de riz reconstitués et enrichis de 45 à 2700 mg/kg d'équivalents de vitamine A comme esters de rétinyle, de 60 à 3600 mg/kg de vitamine B1, de 20 à 1200 mg/kg d'acide folique, de 0,8 à 48 g/kg de niacine, et de 0,12 à 7,2 mg/kg de vitamine B12.
